# EUROPEAN PATENT SPECIFICATION

(11) **EP 2 391 064 B1**
(45) Date of publication and mention of the grant of the patent: **29.11.2017**
(21) Application number: 11172378.9
(22) Date of filing: 26.06.2006
(51) Int. Cl.: H04W 28/22, H04W 36/16, H04W 48/16

(54) **LIMITED-USE DATA RATES IN A WIRELESS LOCAL AREA NETWORK**
DATENRATEN MIT BESCHRÄNKTEM GEBRAUCH IN EINEM DRAHTLOSEN LOKALEN NETZWERK
TAUX DE TRANSMISSION DE DONNÉES À USAGE LIMITÉ DANS UN RÉSEAU LOCAL SANS FIL

(43) Date of publication of application: 30.11.2011
(62) Divisional of application: 06116088.3
(73) Proprietor: BlackBerry Limited, Waterloo, ON N2K 0A7 (CA); McMASTER UNIVERSITY, Hamilton, Ontario L8S 4L8 (CA)
(72) Inventor: Kezys, Vytas, Ancaster, Ontario L9K 1M3 (CA); Todd, Terence Douglas, Hamilton, Ontario L9C 2B4 (CA); Smadi, Mohammed N.A., Hamilton, Ontario L9A 5E3 (CA)
(74) Representative: Hanna Moore + Curley

(56) References cited:
- WO-A-01/11833
- WO-A1-2004/068808
- US-A1- 2004 023 660

## Description

The invention generally relates to wireless local area networks (WLAN) and to cellular networks. In particular, embodiments of the invention relate to roaming of a dual-mode mobile communication device from a WLAN to a cellular network.

In accordance with the Institute of Electrical and Electronics Engineers (IEEE) 802.11 standard, wireless communication between a mobile station (STA) and an access point (AP) is possible at data rates that are predefined in the standards. IEEE standard 802.11b permits communication in 1, 2, 5.5 and 11 Mbps (Mega bits per second). IEEE standard 802.11a permits communication in 6, 9, 12, 18, 24, 36, 48 and 54 Mbps. IEEE standard 802.11g permits communication in any of the data rates defined in IEEE standard 802.11b and IEEE standard 802.11a, and dictates that support for 1, 2, 5.5, 11, 6,12 and 24 Mbps is mandatory.

The intent behind multiple rates is to permit rate usage which best suits the current STA/AP link quality. Various factors may affect the quality of the link, for example, the distance between the STA and the AP, and increases of electromagnetic noise over the medium connecting the STA and the AP. As the quality of the link decreases, mobile stations will drop to lower rates, which require less signal-to-noise ratio (SNR) for reliable packet transmission performance. The link rate selection algorithm is not specified in IEEE 802.11 but is left up to vendor implementations.

In IEEE 802.11 the STA is responsible for triggering handoffs. A negative consequence of this is that a STA may continue to use a link and operate at data rates which are lower than what may be available should the STA handoff to a different AP. That is, in response to decreases in link quality, the station may continue to drop its data rate rather than to scan for an AP which could provide a higher rate link. When this is true the capacity of the network is affected since the station is continuing to use an unnecessarily low data rate.

To prevent capacity loss due to these effects, some APs prevent stations from communicating with them at data rates below certain specified site-dependent values, even though this contradicts the requirements of current IEEE 802.11 standards. STAs are forced to search for a better AP when these limits are reached. For example, in IEEE 802.11, an AP advertises supported data rates in its Beacon broadcasts. These rates are part of its "BSS Basic Rate Set". By specifying a minimum supported rate the AP can enforce a lower limit on the data rates used in its basic service set (BSS). This will help prevent the capacity-lowering behaviour discussed above. The minimum rate specified by the AP would typically be a function of the surrounding Wi-Fi coverage deployment, i.e., in a dense deployment where low quality links are rare, the minimum advertised data rate could be set higher than in a sparse deployment. The above mechanism is geared towards maintaining high capacity in heavy coverage situations.

However, when leaving the area covered by APs of a WLAN, a STA may not be able to find another WLAN to connect to If the STA is capable also of cellular communication, it may search for a cellular base station and may connect to one if found. A handover from a WLAN to a cellular network may take quite some time, and the mobile station may lose the connection with the WLAN before establishing a connection with the cellular network. If the mobile station is involved in a real-time communication application, for example, a telephone conversation, the application may be interrupted.

US2004/0023660 discloses that network resources such as in a wireless system may be allocated to user devices on the network based upon at least one or more minimum user requirements being satisfied. A user may be determined as satisfied when minimum requirements of rate and delay are reached or maintained. The network may optimize throughput on the network by allowing a maximum number of users on the network to be satisfied. Users may be ranked according to signal quality, and network resources may be allocated to users according to rank to satisfy users until the resources of the network are allocated.

WO 01/11833 discloses a multichannel wireless network and methods for its operation. According to the described embodiments, at least two different types of wireless channels form the network infrastructure. A primary wireless channel is designed for relatively low bit rate, high reliability and network-wide communication. A secondary wireless channel is designed for relatively high bit rate communication, but with potentially lower reliability and shorter ranges. A base station uses the primary wireless channel to configure and control operation of the wireless network, including configuring pairs of devices as requested for direct communication over the secondary wireless channel.

WO 2004/068808 discloses a system and method for a time-scalable priority-based scheduler. A flexible scheduling algorithm utilizing variable scheduling durations enables better system capacity utilization. A rate request is transmitted if data arrives in a buffer, data in the buffer exceeds a buffer depth, and sufficient power exists to transmit at the rate requested. A rate assignment responsive to the rate request indicates a scheduled duration and a scheduled rate applicable for the scheduled duration.

### SUMMARY

Accordingly the present teaching provides a method in a wireless access point in accordance with claim 1. Advantageous features are defined in the dependent claims.

Accordingly the present teaching provides a wireless access point in accordance with claim 14. Advantageous features are defined in the dependent claim.

### BRIEF DESCRIPTION OF THE DRAWINGS

Embodiments are illustrated by way of example and not limitation in the figures of the accompanying drawings, in which like reference numerals indicate corresponding, analogous or similar elements, and in which:
Figure 1 is an illustration of an exemplary communications system comprising a wireless local area network, a mobile station and a cellular base station, according to some embodiments of the invention;
Figure 2 shows an exemplary WLAN management frame according to some embodiments of the invention;
Figure 3 is a flowchart of an exemplary method for a WLAN access point to prepare and transmit the management frame of Figure 2, according to some embodiments of the invention;
Figure 4 is a flowchart of an exemplary simplified method for a WLAN access point, according to some embodiments of the invention; and
Figure 5 is a block diagram of an exemplary access point, according to some embodiments of the invention.

It will be appreciated that for simplicity and clarity of illustration, elements shown in the figures have not necessarily been drawn to scale. For example, the dimensions of some of the elements may be exaggerated relative to other elements for clarity.

### DETAILED DESCRIPTION

In the following detailed description, numerous specific details are set forth in order to provide a thorough understanding of embodiments. However it will be understood by those of ordinary skill in the art that the embodiments may be practiced without these specific details. In other instances, well-known methods, procedures, components and circuits have not been described in detail so as not to obscure the embodiments.

Whilst there are a number of different wireless LAN architectures and the present invention is not limited to any particular one, the following description is generally written using the terminology applied in the ANSI/IEEE 802.11 Standards ("Wireless LAN Medium Access Control and Physical Layer Specifications"). It will be obvious to those of ordinary skill in the art how to modify the following for other existing WLAN standards or future related standards. It will also be obvious to those of ordinary skill in the art how to modify the following for other AP-STA protocols which achieve the same effect of data rate advertisement, such as information elements that are sent, for example, according to Cisco CCX (Cisco Compatible Extensions) procedures.

According to current IEEE 802.11 standards, an AP advertises its supported data rates in a Supported Rates Information Element (IE) and possibly also in an optional Extended Supported Rates IE, both of which are included in management frames. A non-exhaustive list of examples for management frames that include a Supported Rates IE includes probe requests, probe responses, authentication requests, authentication responses, association requests, association responses and beacon frames.

In some embodiments of the invention, violations of the AP's minimum advertised supported data rate are permitted under certain conditions. These violations will allow a STA to operate at link data rates that are lower than the minimum advertised supported data rate. The AP may place time constraints on how long a STA can operate the link at rates below the minimum advertised supported data rate. Once a STA starts operating the link at a rate below the minimum advertised supported data rate, the AP may signal to the STA how much time is left before the time constraint is reached.

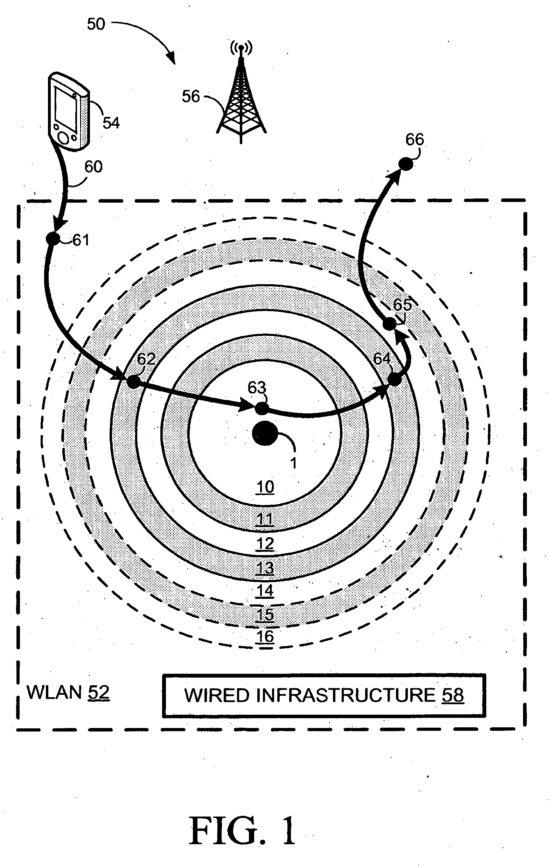

Figure 1 is an illustration of an exemplary communications system 50 comprising a WLAN 52, a mobile station 54 and a cellular communication base station 56. WLAN 52 comprises access points (APs), for example, AP 1. WLAN 52 comprises a wired infrastructure 58 to connect WLAN 52 to other networks (not shown).

APs of WLAN 52 may be connected to infrastructure 58 via wired and/or wireless links. WLAN 52, or,parts of WLAN 52, may be a "mesh" WLAN, in which one or more APs are connected to infrastructure 58 indirectly through other APs. If WLAN 52 or part of WLAN 52 is a mesh WLAN, WLAN 52 may comprise one or more mesh points. Wired links, mesh points and APs other than AP 1 are not shown in Figure 1 so as not to obscure the description of the embodiments of the invention.

Station 54 is able to communicate with cellular communication base station 56 using one or more cellular communication standards. For simplicity of the explanation, cellular communication base station 56 provides a uniform cellular coverage for the area containing WLAN 52.

A non-exhaustive list of examples for standards with which base station 56 and mobile station 54 may comply comprises Direct Sequence - Code Division Multiple Access (DS-CDMA) cellular radiotelephone communication, Global System for Mobile Communications (GSM) cellular radiotelephone, North American Digital Cellular (NADC) cellular radiotelephone, Time Division Multiple Access (TDMA), Extended-TDMA (E-TDMA) cellular radiotelephone, wideband CDMA (WCDMA), General Packet Radio Service (GPRS), Enhanced Data for GSM Evolution (EDGE), 3G and 4G communication.

The actual data rate at which an access point communicates with a mobile station is not higher than the supported data rates, and it generally declines as the distance of the mobile station from the access point increases. Moreover, the actual data rate generally declines as the electromagnetic interference at the vicinity of the access point increases. In a simplified manner, decreases in the feasible communication data rate are schematically illustrated in Figure 1 by concentric circles around AP 1.

v In this example, AP 1 is compatible with 802.11g. AP 1 is programmed or hardwired so its supported data rates are 54, 48, 36, 24, 18, 12 and 11 Mbps. The feasible communication data rate of AP 1 within circle 10 is 54 Mbps. The feasible communication data rate of AP 1 within circular bands 11, 12, 13, 14; 15 and 16 is 48, 24, 11, 5.5, 2 and I Mbps, respectively.

If certain conditions are met, AP 1 may permit a mobile station to communicate with AP 1 for a limited duration of time at a data rate that is lower than the minimal data rate advertised in a Supported Rates IE, a Extended Supported Rates IE or any other similarly advertised IE. To that end, AP 1 may store in its memory identifications of one or more supported limited-use data rates, the one or more conditions to be met, and the permitted duration of time.

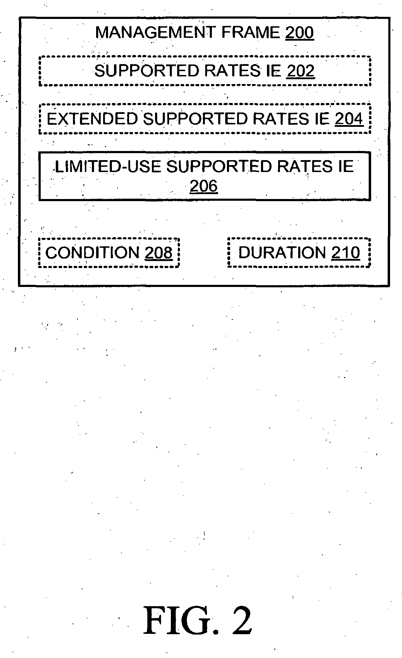

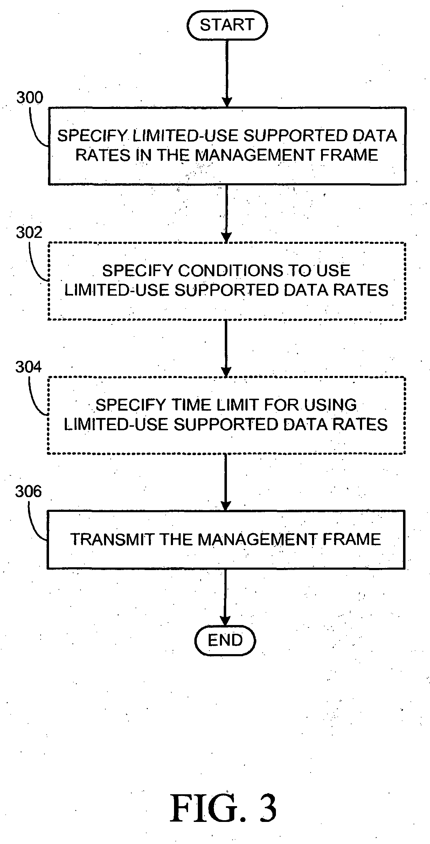

Figure 2 shows an exemplary management frame 200 of AP 1, according to embodiment of the invention, and Figure 3 shows a flowchart of an exemplary method for AP 1 to prepare and transmit management frame 200. Management frame 200 may optionally include a Supported Rates IE 202 in accordance with current or future IEEE 802.11 standards and may optionally include an Extended Supported Rates IE 204 in accordance with current or future IEEE 802.11 standards. Data rates 54, 48, 36, 24, 18, 12 and 11 Mbps may be identified by IE 202 and/or IE 204.

AP 1 may include in management frame 200 an IE 206 that specifies the supported limited-use data rates (300).

AP 1 may optionally specify in a field 208 of frame 200 the one or more conditions that must be met in order for a mobile station to use a limited-use data rate (302). AP 1 may optionally specify in a field 210 of frame 200 the duration of time for which the mobile station is permitted to use a limited-use data rate (304). AP 1 may transmit frame 200 (306).

Returning to Figure 1, station 54 is carried by a user along a trajectory 60 through locations 61 - 66. At location 61, station 54 cannot communicate with AP 1. Station 54 initiates a WLAN connectivity sequence in order to connect to an AP, however, it cannot find one. A WLAN connectivity sequence comprises probing, authentication and association, and may comprise other processes, for example, an IEEE 802.11X authentication process.

At location 62, station 54 completes a WLAN connectivity sequence with AP 1 and can communicate with AP 1. at an actual data rate that is not higher than 11. Mbps since location 62 is within circular band 13.

AP 1 may be configured, for example, with a supported limited-use data rate of 5.5 Mbps and a permitted duration of approximately 10 to 20 seconds. AP 1 may also be configured to grant permissions to communicate at supported limited-use data rates only to mobile stations that communicate real time data, for example, VoIP (voice over Internet protocol) and video streaming, and to provide that support only if the mobile stations are about to roam from WLAN 52 to a cellular network. AP 1 and station 54 may use signaling between them to verify whether roaming of station 54 from WLAN 52 to a cellular network is imminent. The time duration may be set to a value which would be sufficient for executing the handoff from the WLAN to the cellular network.

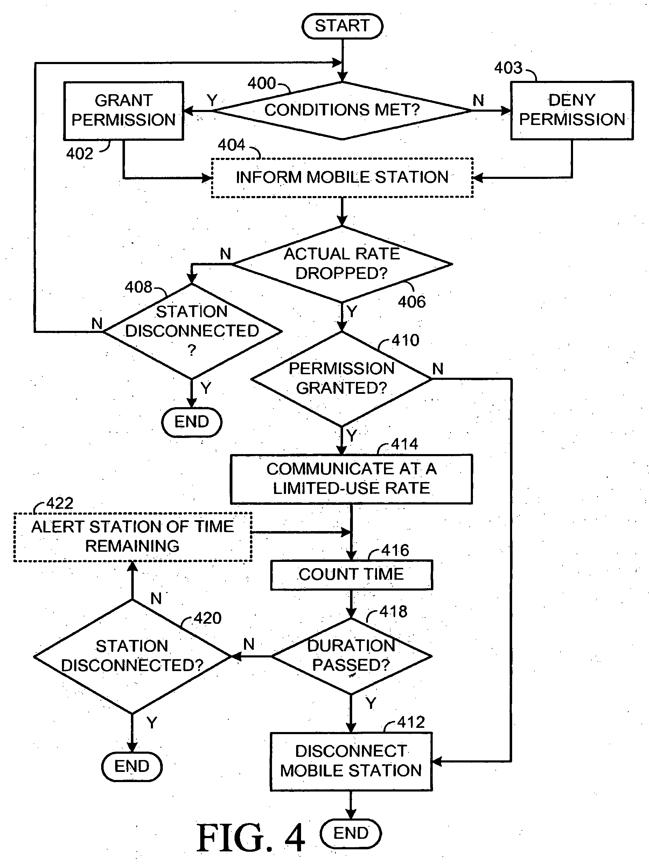

Reference is now made in addition to Figure 4, which shows a flowchart of an exemplary method for AP 1, according to embodiments of the invention. AP 1 may verify, for example, from signaling between AP 1 and station 54, whether the conditions to use limited-use data rates are met by station 54 (400). For example, AP 1 may recognize that station 54 is involved in a VoIP session through AP 1 and that roaming of station 54 from WLAN 52 to a cellular network is imminent.

If the conditions are met, AP 1 may grant permission to station 54 to communicate with AP 1 at a limited-used data rate (402) and may optionally inform station 54 of this (404). If the conditions are not met, AP 1 may deny station 54 permission to communicate with AP 1 at a limited-used data rate (403) and may optionally inform station 54 of this (404).

As long as the actual data rate is one that is indicated in IEs 202 and 204 or any other similarly advertised IE (406) and station 54 is connected to AP 1 (408), AP 1 may continue to check the conditions at 400, as the status may change. For example, while at location 62, station 54 may be involved in data communication and therefore, according to the example, AP 1 may deny station 54 permission to use limited-use data rates. However, at location 63 station 54 may be involved in a voice conversation and, according to the example, AP 1 may grant permission to station 54 to use limited-use data rates.

If station 54 disconnects from AP 1 (checked at 408), the method ends. While at location 64, station 54 and AP 1 may communicate frames of the voice conversation art a supported data rate that is no higher than 11 Mbps. At location 65, the feasible data rate drops to 5.5 Mbps and station 54 can communicate with AP 1 only at limited-use data rates. AP 1 recognizes that communication with station 54 is possible only at limited-use data rates (checked at 406), and AP 1 checks whether permission to use the limited-use data rates is currently granted or denied to station 54 (410).

If permission is currently denied, AP 1 may disconnect station 54 (412) and the method ends. If permission is currently granted, AP 1 communicates with station 54 at a limited-use data rate (414) and starts counting the duration of the communication at a limited-use data rate (416). Whether the duration of time for which station 54 is permitted to use a limited-use data rate has passed is checked (418), and if station 54 disconnects before the end of the permitted duration (420), the method ends. Otherwise, AP 1 may optionally alert station 54 of the permitted time remaining (422) and the method continues to 416. For example, AP 1 may transmit a frame directed to station 54 that comprises an indication of what remains of the duration of time. If the permitted duration of time for communication at a limited-use data rate has expired, AP 1 disconnects station 54 (412) and the method ends.

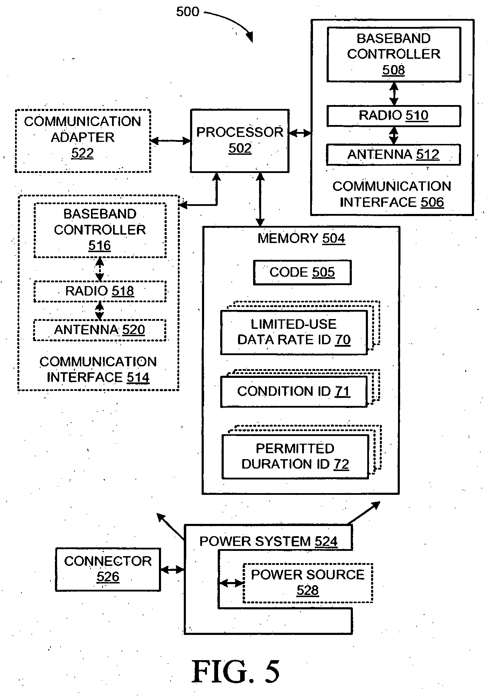

Figure 5 is a block diagram of an exemplary access point 500, according to some embodiments of the invention. AP 500 comprises a processor 502 and a memory 504 coupled to processor 502. Memory 504 comprises identifications 70, 71 and 72 of the one or more supported limited-use data rates, the one or more conditions and the permitted duration of time, respectively. Memory 504 also comprises code 505 that, when executed by processor 502, may implement the methods described herein.

AP 500 comprises a wireless communication interface 506, compatible with one or more standards of the family of IEEE 802.11 wireless communication standards. Wireless communication interface 506 is coupled to processor 502 and comprises at least a baseband controller 508, a radio 510, and an antenna 512.

AP 500 may optionally comprise an additional wireless communication interface 514, compatible with one or more standards of the family of IEEE 802.11 wireless communication standards. Wireless communication interface 514 is coupled to processor 502 and comprises at least a baseband controller 516, a radio 518, and an antenna 520. AP 500 may optionally comprise a wired communication adapter 522, for example, an Ethernet adapter.

By way of wireless communication interface 506 and/or wireless communication interface 514; AP 500 may be able to establish communication sessions with other devices, such as mobile stations and/or other access points.

AP 500 comprises a power system 524 and a connector 526 coupled to power system 524. AP. 500 may optionally comprise a power source 528 coupled to power system 524. Connector 526 is connectable to an external power source (not shown) to provide power for charging power source 528 and/or for operating AP 500. Power system 524 provides electrical coupling between the external power source and power source 528, and provides electrical coupling between power source 528 and the electrical components of AP 500 (e.g: processor 502, memory 504, and the like). As part of the electrical coupling between the external power source and power source 528, power system 524 may control the charging of power source 528 with electrical charge drawn from the external power source.

A non-exhaustive list of examples for processor 502 includes any combination of microprocessors, microcontrollers, central processing units (CPU), digital signal processors (DSP), reduced instruction set computers (RISC), complex instruction set computers (CISC) and the like. Furthermore, processors 502 may comprise more than one processing unit, may be part of an application specific integrated circuit (ASIC) or may be a part of an application specific standard product (ASSP).

A non-exhaustive list of examples for memory 504 includes any combination of a) local memory, bulk storage, cache memory b) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like; c) optical devices, such as compact disk read only memory (CD ROM), and the like; and d) magnetic devices, such as a hard disk, a floppy disk, a magnetic tape, and the like.

A non-exhaustive list of examples for power source 528 includes one or more Ni-Cd (Nickel Cadmium) batteries, one or more Ni-MH (Nickel-Metal Hydride) batteries, one or more Lithium Ion batteries, one or more rechargeable Alkaline batteries, one or more capacitors, one or more super-capacitors, and any other suitable power source. A non-exhaustive list of examples for an external power source includes an AC power source, a DC power source, wind-power-conversion power source, solar-power-conversion power source.

A non-exhaustive list of examples for antennae 512 and 520 includes dipole antennae, monopole antennae, multilayer ceramic antennae, planar inverted-F antennae, loop antennae, shot antennae, dual antennae, omnidirectional antenna and any other suitable antennae.

A non-exhaustive list of examples for mobile station 54 includes a wireless-enabled laptop, a wireless-enabled cellphone, a wireless-enabled personal digital assistant (PDA), a wireless-enabled video camera, a wireless-enabled gaming console, a wireless Internet Protocol (IP) phone and any other suitable mobile station.

Although the example described above relates to a handoff of a mobile station from an IEEE 802.11 wireless network to a cellular network, embodiments of the invention are applicable to other situations in which a mobile station needs to communicate with an access point at a lower data rate than those advertised in the Supported Rates IE, Extended Supported Rates IE or any other similarly advertised IE. For example, the handoff may be to a non-cellular network. In another example, the handoff may be within an IEEE 802.11 WLAN but from an access point that is part of one Extended Service Set (ESS) to another access point that is part of a different ESS. The different ESS may be in a different IP subnetwork. Such a handoff may last up to several seconds, and it may be beneficial to extend the connection of the mobile station to the current access point.

Aspects and features of this disclosure are set out in the flowing paragraphs provided as clauses, which correspond to the claims of the parent application as filed:
1. A method in a wireless access point (1, 500), the method comprising: advertising data rates that are supported by said wireless access point (1, 500); and permitting a mobile station (54) to conduct communications with said access point (1, 500) at one or more lower data rates of said advertised data rates only if said mobile station (54) satisfies one or more conditions.
2. The method of clause 1, wherein said one or more conditions comprises that said mobile station (54) has an active real time connection in progress and/or that said mobile station (54) has an active voice connection in progress.
3. The method of clause 1 or clause 2, wherein said one or more conditions comprises that said mobile station (54) is about to perform a handoff to another network (56).
4. The method of clause 3, further comprising:
   recognizing from signaling with said mobile station (54) that said mobile station (54) is about to perform said handoff.
5. The method of any one of clauses 1 to 4, further comprising:
   advertising said one or more conditions, and/or communicating with said mobile station (54) at said one or more lower data rates when said mobile station (54) is unable to communicate with said access point (1, 500) at a higher data rate than said one or more lower data rates.
6. The method of any one of clauses 1 to 5, further comprising:
   limiting a duration of said communications.
7. The method of any one of clauses 1 to 5, further comprising:
   limiting a duration of said communications to an amount of time that is sufficient for said mobile station (54) to perform a handoff from said access point (1, 500) to another network (56).
8. The method of clause 6 or clause 7, further comprising:
   advertising a permitted duration of said communications, and/or informing said mobile station (54) how much time of said duration remains.
9. The method of clause 3 or clause 7, wherein said other network (56) is a cellular network.
10. The method of any one of clauses 1 to 9, further comprising:
   receiving a request from a mobile station (54) for permission to communicate with said access point (1, 500) at one of said one or more lower data rates; and
   informing said mobile station (54) whether said permission has been granted.
11. A method in a mobile station (54), the method comprising:
   signaling to an access point (1, 500) that a handoff of said mobile station (54) from said access point (1, 500) to another type of network is imminent; and
   requesting from said access point (1, 500) permission to communicate with said access point (1, 500) at a limited-use supported data rate.
12. The method of clause 11, wherein said wireless network is a cellular network.
13. A wireless access point (1, 500) comprising:
   a wireless communication interface (506) through which said access point (1, 500) is able to communicate with a mobile station (54) associated with said access point (1, 500);
   a processor (502) coupled to said wireless communication interface (506); and
   a memory (504) coupled to said processor (502) to store indications (70) of one or more limited-use supported data rates, indications (71) of one or more conditions, an indication (72) of a duration of time, and executable code means (505) which, when executed by said processor(502), are arranged to permit said mobile station (54), if said conditions are met, to communicate with said access point (1, 500) at said data rates for said duration of time after said executable code means has determined that said mobile station (54) is not able to communicate with said access point (1, 500) at a higher data rate.
14. The wireless access point (1, 500) of clause 13, wherein said executable code means (505), when executed by said processor (502), are further arranged:
   to recognize from a transmission received from said mobile station (54) via said interface (506) that said conditions are met, prior to permitting said mobile station (54) to communicate with said access point (1, 500) at said data rates for said duration of time, and/or
   to transmit via said interface (506) a management frame having incorporated therein an indication of said one or more limited-use supported data rates, and/or
   to incorporate in said management frame an indication of said one or more condition and/or an indication of said duration of time.
15. The wireless access point (1, 500) of clause 13 or clause 14, wherein said limited-use supported data rates, said conditions and said duration are configurable.
16. A mobile station (54) comprising:
   means for signaling to an access point (1, 500) that a handoff of said mobile station (54) from said access point (1, 500) to another type of network is imminent; and
   means for requesting from said access point (1, 500) permission to communicate with said access point (1, 500) at a limited-use supported data rate.
17. A computer program product comprising a machine readable medium embodying program code executable by a processor of a computing device or system for causing said computing device or system to implement the method of any one of clauses 1 to 10 or the method of clause 11 or clause 12.
18. A communication network comprising the wireless access point (1, 500) of any one of clauses 13 to 15 and at least one mobile station (54) according to clause 16.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method in a wireless access point (1, 500) that is supporting a wireless local area network (52), the method comprising:
from a list of data rates that are supported by the wireless access point, specifying a minimum data rate for advertisement in the wireless local area network, wherein one or more of the supported data rates are less than the minimum data rate for advertisement;
advertising an indication of the minimum data rate;
receiving a request from a mobile station (54) to communicate with the wireless access point at one of the one or more supported data rates that are less than the minimum data rate for advertisement; and
permitting said mobile station to conduct communications with said wireless access point at one or more of said one or more supported data rates reserved for limited use, that are less than the minimum data rate for advertisement for no more than a limited period of time if said mobile station satisfies at least one or more conditions said one or more conditions comprising:
said mobile station has an active real time connection in progress and/or
said mobile station has an active voice connection in progress and/or
said mobile station is about to perform a handoff to another network, and
informing the mobile station how much time communications with the wireless access point at the one or more supported data rates that are less than the minimum data rate for advertisement will be permitted.

2. The method as recited in claim 1, wherein the mobile station has an active real time connection and/or an active voice connection in progress when making the request.

3. The method as recited in claim 1, wherein the mobile station is about to perform a handoff to another network (56) when making the request.

4. The method as recited in claim 3, further comprising:
recognizing from signaling with the mobile station that the mobile station is about to perform the handoff.

5. The method as recited in claim 1, wherein the time is sufficient for the mobile station to perform a handoff from the wireless access point to another network.

6. The method as recited in any one of claims 1 to 5, wherein the other network is a cellular network.

7. The method as recited in any one of claims 1 to 6, further comprising:
specifying the one or more supported data rates that are less than the minimum data rate for advertisement in a management frame (200); and
transmitting the management frame in the wireless local area network.

8. The method as recited in any one of claims 1 to 7, further comprising:
at a later time after informing the mobile station, informing the mobile station how much time communications with the wireless access point at the one or more supported data rates that are less than the minimum data rate for advertisement will be permitted.

9. A method in a mobile station (54), the method comprising:
receiving an advertisement from a wireless access point (1, 500) belonging to a wireless local area network (52), the advertisement advertising an indication of a minimum data rate that has been specified for advertisement by the wireless access point from a list of data rates that are supported by the wireless access point wherein one or more of the supported data rates are less than the minimum data rate for advertisement;
sending to the wireless access point a request to communicate with the wireless access point at one of the one or more supported data rates that are less than the minimum data rate for advertisement; and
receiving from the wireless access point an indication of how much time communications with the wireless access point at the one or more supported data rates that are less than the minimum data rate for advertisement will be permitted.

10. The method as recited in claim 9, further comprising:
receiving from the wireless access point a management frame (200) that specifies the one or more supported data rates that are less than the minimum data rate for advertisement.

11. The method as recited in claim 10, further comprising:
signaling to the wireless access point that a handoff of the mobile station from the wireless access point to a network of a different type than the network to which the wireless access point belongs is imminent.

12. The method as recited in claim 11, wherein the network of a different type is a cellular network.

13. The method as recited in any one of claims 9 to 12, further comprising:
communicating with the wireless access point at one of the one or more supported data rates that are less than the minimum data rate for advertisement.

14. A wireless access point (1, 500) comprising:
a wireless communication interface (506) through which the wireless access point is able to support a wireless local area network (52) and to communicate with mobile stations (54);
a processor (502) coupled to the wireless communication interface; and
a memory (504) coupled to the processor,
wherein the wireless access point is to specify a minimum data rate for advertisement in the wireless local area network from a list of data rates that are supported by the wireless access point, and the wireless access point is to advertise an indication of the minimum data rate for advertisement,
wherein one or more of the supported data rates are less than the minimum data rate for advertisement,
wherein the wireless access point is able to receive through the wireless communication interface a request from a mobile station (54) to communicate with the wireless access point at one of the one or more supported data rates that are less than the minimum data rate for advertisement; and
wherein the memory is to store executable code means (505) which, when executed by the processor, informs the mobile station through the wireless communication interface how much time communications with the wireless access point at one or more of the one or more supported data rates that are less than the minimum data rate for advertisement will be permitted.

15. The wireless access point as recited in claim 14, wherein the executable code means, when executed by the processor, transmits via the wireless communication interface a management frame (200) having incorporated therein an indication (206) of the one or more supported data rates that are less than the minimum data rate for advertisement.

16. The wireless access point as recited in claim 14 or claim 15, wherein the one or more supported data rates that are less than the minimum data rate for advertisement are configurable.

## Patentansprüche

1. Verfahren in einem drahtlosen Zugangspunkt (1, 500), der ein drahtloses lokales Netzwerk (52) unterstützt, wobei das Verfahren aufweist:
aus einer Liste von Datenraten, die von dem drahtlosen Zugangspunkt unterstützt werden, Spezifizieren einer Minimumdatenrate zum Anbieten in dem drahtlosen lokalen Netzwerk, wobei eine oder mehrere der unterstützten Datenraten geringer sind als die Minimumdatenrate zum Anbieten;
Anbieten einer Angabe der Minimumdatenrate;
Empfangen einer Anforderung von einer mobilen Station (54) zum Kommunizieren mit dem drahtlosen Zugangspunkt mit einer der einen oder mehreren unterstützten Datenraten, die geringer sind als die Minimumdatenrate zum Anbieten; und
Zulassen, dass die mobile Station Kommunikationen mit dem drahtlosen Zugangspunkt mit einer oder mehreren der einen oder mehreren unterstützten Datenraten führt, die für eine begrenzte Nutzung reserviert sind, die geringer sind als die Minimumdatenrate zum Anbieten, für nicht länger als eine begrenzte Zeitperiode, wenn die mobile Station zumindest eine oder mehrere Bedingungen erfüllt, wobei die eine oder mehreren Bedingungen aufweisen:
die mobile Station hat eine aktive Echtzeitverbindung im Gange,
und/oder
die mobile Station hat eine aktive Sprachverbindung im Gange,
und/oder
die mobile Station ist im Begriff, eine Übergabe bzw. ein Handoff an ein anderes Netzwerk durchführen, und
Informieren der mobilen Station, wie lange Kommunikationen mit dem drahtlosen Zugangspunkt mit der einen oder mehreren unterstützten Datenraten, die geringer sind als die Minimumdatenrate zum Anbieten, zulässig sind.

2. Das Verfahren gemäß Anspruch 1, wobei die mobile Station eine aktive Echtzeitverbindung und/oder eine aktive Sprachverbindung im Gange hat, wenn die Anforderung getätigt wird.

3. Das Verfahren gemäß Anspruch 1, wobei die mobile Station im Begriff ist, eine Übergabe an ein anderes Netzwerk (56) durchzuführen, wenn die Anforderung getätigt wird.

4. Das Verfahren gemäß Anspruch 3, das weiter aufweist:
Erkennen aus einer Signalisierung mit der mobilen Station, dass die mobile Station im Begriff ist, die Übergabe durchzuführen.

5. Das Verfahren gemäß Anspruch 1, wobei die Zeit ausreichend ist, dass die mobile Station eine Übergabe von dem drahtlosen Zugangspunkt zu einem anderen Netzwerk durchführt.

6. Das Verfahren gemäß einem der Ansprüche 1 bis 5, wobei das andere Netzwerk ein zellulares Netzwerk ist.

7. Das Verfahren gemäß einem der Ansprüche 1 bis 6, das weiter aufweist:
Spezifizieren der einen oder mehreren unterstützten Datenraten, die geringer sind als die Minimumdatenrate zum Anbieten, in einem Verwaltungsrahmen (200); und
Übertragen des Verwaltungsrahmens in das drahtlose lokale Netzwerk.

8. Das Verfahren gemäß einem der Ansprüche 1 bis 7, das weiter aufweist:
an einem späteren Zeitpunkt nach dem Informieren der mobilen Station, Informieren der mobilen Station, wie lange Kommunikation mit dem drahtlosen Zugangspunkt mit der einen oder mehreren unterstützten Datenraten, die geringer sind als die Minimumdatenrate zum Anbieten, zulässig sind.

9. Ein Verfahren in einer mobilen Station (54), wobei das Verfahren aufweist:
Empfangen eines Anbietens von einem drahtlosen Zugangspunkt (1, 500), der zu einem drahtlosen lokalen Netzwerk (52) gehört, wobei das Anbieten eine Angabe einer Minimumdatenrate anbietet, die zum Anbieten spezifiziert wurde durch den drahtlosen Zugangspunkt aus einer Liste von Datenraten, die von dem drahtlosen Zugangspunkt unterstützt werden, wobei eine oder mehrere der unterstützten Datenraten geringer sind als die Minimumdatenrate zum Anbieten;
Senden, an den drahtlosen Zugangspunkt, einer Anforderung zum Kommunizieren mit dem drahtlosen Zugangspunkt mit einer der einen oder
mehreren unterstützten Datenraten, die geringer sind als die Minimumdatenrate zum Anbieten; und
Empfangen, von dem drahtlosen Zugangspunkt, einer Angabe, wie lange Kommunikationen mit dem drahtlosen Zugangspunkt mit der einen oder mehreren unterstützten Datenraten, die geringer sind als die Minimumdatenrate zum Anbieten, zulässig sind.

10. Das Verfahren gemäß Anspruch 9, das weiter aufweist:
Empfangen, von dem drahtlosen Zugangspunkt, eines Verwaltungsrahmens (200), der die eine oder mehreren unterstützten Datenraten spezifiziert, die geringer sind als die Minimumdatenrate zum Anbieten.

11. Das Verfahren gemäß Anspruch 10, das weiter aufweist:
Signalisieren an den drahtlosen Zugangspunkt, dass eine Übergabe der mobilen Station von dem drahtlosen Zugangspunkt zu einem Netzwerk eines anderen Typs als das Netzwerk, zu dem der drahtlose Zugangspunkt gehört, unmittelbar bevorsteht.

12. Das Verfahren gemäß Anspruch 11, wobei das Netzwerk eines anderen Typs ein zellulares Netzwerk ist.

13. Das Verfahren gemäß einem der Ansprüche 9 bis 12, das weiter aufweist:
Kommunizieren mit dem drahtlosen Zugangspunkt mit einer der einen oder mehreren unterstützten Datenraten, die geringer sind als die Minimumdatenrate zum Anbieten.

14. Ein drahtloser Zugangspunkt (1, 500), der aufweist:
eine drahtlose Kommunikationsschnittstelle (506), über die der drahtlose Zugangspunkt in der Lage ist, ein drahtloses lokales Netzwerk (52) zu unterstützen und mit mobilen Stationen (54) zu kommunizieren;
einen Prozessor (502), der mit der drahtlosen Kommunikationsschnittstelle gekoppelt ist; und
einen Speicher (504), der mit dem Prozessor gekoppelt ist,
wobei der drahtlose Zugangspunkt vorgesehen ist zum Spezifizieren einer Minimumdatenrate zum Anbieten in dem drahtlosen lokalen Netzwerk aus einer Liste von Datenraten, die von dem drahtlosen Zugangspunkt unterstützt werden, und der drahtlose Zugangspunkt vorgesehen ist zum Anbieten einer Angabe der Minimumdatenrate zum Anbieten,
wobei eine oder mehrere der unterstützten Datenraten geringer sind als die Minimumdatenrate zum Anbieten,
wobei der drahtlose Zugangspunkt in der Lage ist zum Empfangen, über die drahtlose Kommunikationsschnittstelle, einer Anforderung von einer mobilen Station (54) zum Kommunizieren mit dem drahtlosen Zugangspunkt mit einer der einen oder mehreren unterstützten Datenraten, die geringer sind als die Minimumdatenrate zum Anbieten; und
wobei der Speicher vorgesehen ist zum Speichern von ausführbarem Codemittel (505), das bei Ausführung durch den Prozessor die mobile Station über die drahtlose Kommunikationsschnittstelle informiert, wie lange Kommunikationen mit dem drahtlosen Zugangspunkt mit einer oder mehreren der einen oder mehreren unterstützten Datenraten, die geringer sind als die Minimumdatenrate zum Anbieten, zulässig sind.

15. Der drahtlose Zugangspunkt gemäß Anspruch 14, wobei das ausführbare Codemittel, bei Ausführung durch den Prozessor, über die drahtlose Kommunikationsschnittstelle einen Verwaltungsrahmen (200) überträgt, der eine Angabe (206) der einen oder mehreren unterstützten Datenraten enthält, die geringer sind als die Minimumdatenrate zum Anbieten.

16. Der drahtlose Zugangspunkt gemäß Anspruch 14 oder Anspruch 15, wobei die eine oder mehreren unterstützten Datenraten, die geringer sind als die Minimumdatenrate zum Anbieten, konfigurierbar sind.

## Revendications

1. Procédé exécuté sur un point d'accès sans fil (1, 500) qui supporte un réseau local sans fil (52), le procédé comprenant les étapes consistant à :
à partir d'une liste de débits de données qui sont supportés par le point d'accès sans fil, spécifier un débit de données minimal pour la diffusion sur le réseau local sans fil, un ou plusieurs des débits de données supportés étant inférieurs au débit de données minimal pour la diffusion ;
diffuser une indication du débit de données minimal ;
recevoir d'une station mobile (54) une demande de communication avec le point d'accès sans fil à l'un des débits parmi lesdits un ou plusieurs débits de données supportés qui sont inférieurs au débit de données minimal pour la diffusion ; et
autoriser ladite station mobile à mener des communications avec ledit point d'accès sans fil à un ou plusieurs débits sur lesdits un ou plusieurs débits de données qui sont réservés pour une utilisation limitée et qui sont inférieurs au débit de données minimal pour la diffusion, pendant au plus une période de temps limitée, si ladite station mobile répond au moins à une ou plusieurs conditions, lesdites une ou plusieurs conditions étant les suivantes :
ladite station mobile possède une connexion en temps réel active en cours ; et/ou
ladite station mobile possède une connexion vocale active en cours ; et/ou
ladite station mobile est sur le point d'effectuer un transfert vers un autre réseau ; et
informer la station mobile de la durée pendant laquelle la communication sera autorisée avec le point d'accès sans fil à un ou plusieurs débits de données supportés qui sont inférieurs au débit de données minimal pour la diffusion.

2. Procédé selon la revendication 1, dans lequel la station mobile possède une connexion en temps réel active et/ou une connexion vocale active en cours lorsqu'elle soumet la demande.

3. Procédé selon la revendication 1, dans lequel la station mobile est sur le point d'effectuer un transfert vers un autre réseau (56) lorsqu'elle soumet la demande.

4. Procédé selon la revendication 3, comprenant en outre l'étape consistant à :
déterminer à partir de la signalisation avec la station mobile que la station mobile est sur le point d'effectuer le transfert.

5. Procédé selon la revendication 1, dans lequel la durée est suffisante pour que la station mobile exécute un transfert entre le point d'accès sans fil et un autre réseau.

6. Procédé selon l'une quelconque des revendications 1 à 5, dans lequel l'autre réseau est un réseau cellulaire.

7. Procédé selon l'une quelconque des revendications 1 à 6, comprenant en outre les étapes consistant à :
spécifier dans une trame de gestion (200) lesdits un ou plusieurs débits de données supportés qui sont inférieure au débit de données minimal pour la diffusion ; et
émettre la trame de gestion sur le réseau local sans fil.

8. Procédé selon l'une quelconque des revendications 1 à 7, comprenant en outre l'étape consistant à :
à un instant ultérieur après l'étape d'information de la station mobile, informer la station mobile de la durée pendant laquelle les communications avec le point d'accès sans fil seront autorisées auxdits un ou plusieurs débit des données supportés qui sont inférieurs au débit de données minimal pour la diffusion.

9. Procédé exécuté sur une station mobile (54), le procédé comprenant les étapes consistant à :
recevoir un message diffusé à partir d'un point d'accès sans fil (1, 500) appartenant à un réseau local sans fil (52), le message diffusant une indication d'un débit de données minimal qui a été spécifié pour la diffusion par le point d'accès sans fil, à partir d'une liste de débits de données qui sont supportés par le point d'accès sans fil, un ou plusieurs des débits de données supportés étant inférieurs au débit de données minimal pour la diffusion ;
envoyer au point d'accès sans fil une demande de communication avec le point d'accès sans fil à l'un des débits parmi lesdits un ou plusieurs débits de données supportés qui sont inférieurs au débit de données minimal pour la diffusion ; et
recevoir du point d'accès sans fil une indication de la durée pendant laquelle les communications seront autorisées avec le point d'accès sans fil auxdits un ou plusieurs débits de données supportés qui sont inférieurs au débit de données minimal pour la diffusion.

10. Procédé selon la revendication 9, comprenant en outre l'étape consistant à :
recevoir du point d'accès sans fil une trame de gestion (200) qui spécifie lesdits un ou plusieurs débits de données supportés qui sont inférieurs au débit de données minimal pour la diffusion.

11. Procédé selon la revendication 10, comprenant en outre l'étape consistant à :
signaler au point d'accès sans fil qu'un transfert de la station mobile est imminent entre le point d'accès sans fil et un réseau d'un autre type que le réseau auquel appartient le point d'accès sans fil.

12. Procédé selon la revendication 11, dans lequel le réseau de type différent est un réseau cellulaire.

13. Procédé selon l'une quelconque des revendications 9 à 12, comprenant en outre l'étape consistant à :
communiquer avec le point d'accès sans fil à un débit parmi lesdits un ou plusieurs débits de données supportés qui sont inférieurs au débit de données minimal pour la diffusion.

14. Point d'accès sans fil (1, 500) comprenant :
une interface de communication sans fil (506) grâce à laquelle le point d'accès sans fil est en mesure de supporter un réseau local sans fil (52) et de communiquer avec des stations mobiles (54) ;
un processeur (502) couplé à l'interface de communication sans fil ; et
une mémoire (504) couplée au processeur ;
dans lequel le point d'accès sans fil doit spécifier un débit de données minimal pour la diffusion sur le réseau local sans fil, à partir d'une liste de débits de données qui sont supportés par le point d'accès sans fil, et le point d'accès sans fil doit diffuser une indication du débit de données minimal pour la diffusion ;
dans lequel un ou plusieurs des débits de données supportés sont inférieurs au débit de données minimal pour la diffusion ;
dans lequel le point d'accès sans fil est en mesure de recevoir via l'interface de communication sans fil une demande provenant d'une station mobile (54) afin de communiquer avec le point d'accès sans fil à un débit parmi lesdits un ou plusieurs débits de données supportés qui sont inférieurs au débit de données minimal pour la diffusion ; et
dans lequel la mémoire stocke un moyen de code exécutable (505) qui, lorsqu'il est exécuté par le processeur, informe la station mobile via l'interface de communication sans fil de la durée pendant laquelle les communications avec le point d'accès sans fil seront supportées auxdits un ou plusieurs débits parmi lesdits un ou plusieurs débits de données supportés qui sont inférieurs au débit de données minimal pour la diffusion.

15. Point d'accès sans fil selon la revendication 14, dans lequel le moyen de code exécutable, lorsqu'il est exécuté par le processeur, émet via l'interface de communication sans fil une trame de gestion (200) qui comporte une indication (206) desdits un ou plusieurs débits de données supportés qui sont inférieurs au débit de données minimal pour la diffusion.

16. Point d'accès sans fil selon la revendication 14 ou la revendication 15, dans lequel lesdits un ou plusieurs débits de données supportés qui sont inférieurs au débit de données minimal pour la diffusion sont configurables.
